# EUROPÄISCHE PATENTSCHRIFT

(11) **EP 0 388 872 B1**
(45) Veröffentlichungstag und Bekanntmachung des Hinweises auf die Patenterteilung: **04.08.1993**
(21) Anmeldenummer: 90105197.9
(22) Anmeldetag: 20.03.1990
(51) Int. Cl.: G01B 11/30, G01B 11/06, G01N 21/55

(54) **Verfahren zur Untersuchung von Oberflächenstrukturen**
Method for examination of surface structures
Méthode pour examiner des structures de surface

(30) Priorität: 21.03.1989 DE 3909143
(43) Veröffentlichungstag der Anmeldung: 26.09.1990
(73) Patentinhaber: BASF Aktiengesellschaft, 67063 Ludwigshafen (DE)
(72) Erfinder: Hickel, Werner, Dr., D-6800 Mannheim 24 (DE); Knoll, Wolfgang, Dr., D-6500 Mainz (DE); Rothenhaeusler, Benno, Dr., D-8978 Burgberg (DE)

(56) Entgegenhaltungen:
- EP-A- 0 019 724
- ELECTRONIC LETTERS Band 23, Nr. 20, 24. September 1987, pages 1091,1092, Stevenage, Herts., GB; E. YEATMAN et al.: "Surface plasmon microscopy"
- APPLIED OPTICS Band 27, Nr. 16, 15. August 1988, Seiten 3334-3340, New York, NY, US; A. FONTANA et al.: "Characterization of dielectric-coated, metal mirrors using surface plasmon spectroscopy"

## Beschreibung

Die Erfindung betrifft ein Verfahren zur Untersuchung von Oberflächenstrukturen hinsichtlich Brechungsindex und/oder Höhenmodulation der Oberfläche.

Oberflächen-Plasmonen (= PSP = Plasmon Surface Polaritons) sind gebundene, nichtstrahlende elektromagnetische Moden, die sich entlang einer Grenzfläche Metall/Dielektrikum ausbreiten (vgl. E. Burstein, W.P. Chen und A. Hartstein, J. Vac. Sci. Technology 11 (1974) 1004 sowie H. Raether in: Physics of Thin Films, Vol. 9, 145-261; Hrsg. G. Hass, M.H. Francombe und R.W. Hoffmann, Academic Press, New York 1977). Ihre Feldintensität, deren Maximum an der Metalloberfläche liegt, fällt senkrecht zur Oberfläche exponentiell ab, sowohl in das Metall, als auch in das Dielektrikum hinein (also gebundene Wellen), ist aber infolge von dissipativen (vgl. T.Inagaki, K. Kagami und E.T. Arakawa, Phys. Rev. B24 (1981) 3644; B. Rothenhäusler, J. Rabe, Korpiun und W. Knoll, Surf.Sci. 137 (1984), 373, sowie B. Rothenhäusler und W. Knoll, Surf.Sci. 191 (1987), 585) und Strahlungsverlusten auch entlang der Ausbreitungsrichtung gedämpft (vgl. A. Otto, Optik 38 (1973), 566 und J. Schoenwald, E. Burstein und J.M. Elson, Solid State Commun. 12 (1973) 185).

Für die Oberflächen-Plasmonen-Mikroskopie (= SPM), wie sie bisher beschrieben wurde, mußte die zu untersuchende dünne Schicht auf eine Metall- oder Halbleiterschicht aufgebracht werden. Außerdem können mit diesem Verfahren nur dünne Schichten ≦ 1 µm untersucht werden.

PSP werden hierzu mit einer Kopplungsanordnung (z.B. Gitter, Prisma) angeregt. Bevorzugt ist die Kretschmann-Anordnung bei der monochromatisches paralleles Licht bevorzugt von einem Helium-Neon-Laser oder Argonionen-Laser unter dem Einstrahlwinkel Θ auf ein Prisma fällt, dessen Basisfläche mit einem dünnen Metall- oder Halbleiterfilm beschichtet ist. Als Metallfilm ist Silber, Gold oder ein Schichtsystem aus Chrom und Gold bevorzugt. Wird auf diese Metallschicht eine strukturierte dünne Schicht aufgebracht, kann diese mit Hilfe von PSP durch das SPM sichtbar gemacht werden. Dieses Verfahren erlaubt eine sehr hohe Vertikalauflösung. Dickenunterschiede von wenigen 0,1 nm können so sichtbar gemacht werden. Nachteil dieses Verfahrens ist, daß nur dünne auf das Metall aufgebrachte Schichten untersucht werden können.

Aufgabe der vorliegenden Erfindung ist es, ein Verfahren aufzuzeigen, das es erlaubt, mittels SPM freie Oberflächen, die eine Höhenmodulation und/oder einen strukturierenden Brechungsindex aufweisen, abzubilden.

Gegenstand der vorliegenden Erfindung ist ein Verfahren zur Untersuchung von hinsichtlich Brechungsindex und/oder Höhenmodulation der Oberfläche unterschiedlichen Oberflächenstrukturen wie in Anspruch 1 definiert, das dadurch gekennzeichnet ist, daß diese Oberflächenstrukturen in ein Oberflächen-Plasmonen-Feld gebracht werden und mittels Oberflächen-Plasmonen-Mikroskopie abgetastet werden.

Dazu kann die Oberflächenstruktur mittels einer Vorrichtung einer Metall- oder Halbleiterschicht, die sich auf einer Seite eines Glasprismas befindet, parallel zu dieser Metall- oder Halbleiterschicht genähert werden, wobei sich zwischen zu untersuchender Oberflächenstruktur und Metall- oder Halbleiterschicht ein Vakuum oder ein transparentes Medium befindet und das transparente Medium flüssig oder gasförmig sein kann.

Für das erfindungsgemäße Verfahren wird zur Anregung der PSP sowie zur SPM die oben angeführte Kretschmann-Anordnung verwendet. Der Einfallswinkel Θ des Lasers wird auf den PSP-Resonanzwinkel - das ist der Winkel, bei dem PSP und eingestrahltes Licht optimal koppeln - eingestellt.

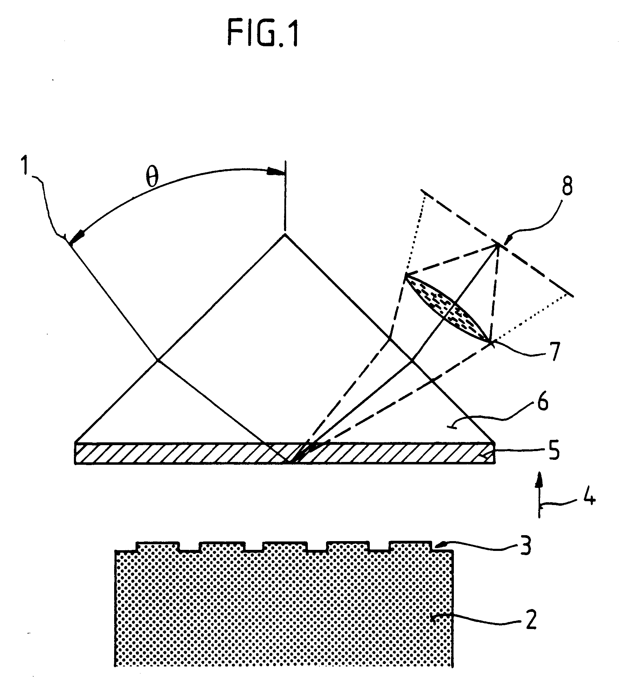

Die zu untersuchende Oberfläche wird nun mittels einer Vorrichtung parallel zur Metall- oder Halbleiterschicht, die sich auf einer Seite des Prismas befindet, der Metall- oder Halbleiterschicht genähert. Eine geeignete Untersuchungsanordnung wird schematisch in Fig. 1 gezeigt. Darin bedeutet 1 = Lichtquelle (Laserstrahl); 2 = externe Probe; 3 = Oberflächenstruktur der externen Probe; 4 = Hubvorrichtung; 5 = Metallfilm (Ag); 6 = Glasprisma; 7 = Linse; 8 = Videokamera/Monitor. Durch Höhen- oder Brechungsindexstrukturen der Oberfläche der zu untersuchenden Probe werden bei entsprechend geringem Abstand zwischen Probenoberfläche und Metall- oder Halbleiterschicht die PSP der ungestörten Grenzfläche Metall/Dielektrikum unterschiedlich gestört, was zur Kontrastbildung für die SPM führt. Die SPM liefert so ein Abbild der Oberflächenstruktur der Probe. Die so erreichte Auflösung ist derjenigen der SPM in ihrer bisher beschriebenen Form vergleichbar.

Befindet sich zwischen Metallschicht und Probe anstatt eines Vakuums oder Gases eine geeignete Immersionsflüssigkeit, so erhöht sich der Kontrast des SPM.

Ein wesentlicher Vorteil des erfindungsgemäßen Verfahrens ist es, daß auf diese Weise von außen der Metallschicht auf dem Prisma genäherte Proben mit freien Oberflächen untersucht werden können.

Aus der Patentanmeldung EP-A-0 019 724 ist ein Verfahren bekannt, bei dem die zu untersuchende Schicht auf eine Metallschicht, in der Oberflächen-Plasmonen angeregt werden, aufgebracht werden muß. Die zu untersuchende Schicht kann bewegt und ortsabhängig die Oberflächen-Plasmonenspektren gemessen werden. Auch mit diesem Verfahren muß jedoch die zu untersuchende dünne Schicht auf eine Metallschicht aufgebracht werden.

Es lassen sich so Oberflächen von Proben unterschiedlicher Zusammensetzung, wie z.B. Glas, Harz, Polymerisat, z.B. Folien, Halbleiter, wie z.B. Silicium oder auch Metall sowie biologische Substrate untersuchen.

Die Erfindung wird durch das nachfolgende Beispiel erläutert.

### Beispiel

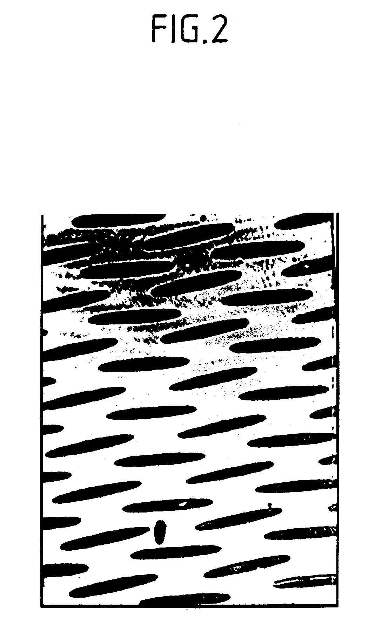

Ein Dianegativ, dessen Oberfläche in den belichteten Bereichen tiefer als in den unbelichteten ist, wird durch eine geeignete Montagevorrichtung, z.B. bestehend aus einem Schrittmotor zur groben Annäherung und einem Piezostellelement zur Feinjustierung, dem auf einem Glasprisma angebrachten Ag-Metallfilm genähert. Bei Abständen <200 nm wird die höhenmodulierte Oberfläche sichtbar. Die in Fig. 2 dargestellte Aufnahme wurde mit einem SPM (siehe Fig. 1) bei einem Abstand Ag-Film/Dianegativ von ca. 10 nm gemacht. Die Höhenmodulation dieser Probe betrug 0,6 µm.

## Patentansprüche

1. Verfahren zur Untersuchung von hinsichtlich Brechungsindex und/oder Höhenmodulation der Oberfläche unterschiedlicher Oberflächenstrukturen, dadurch gekennzeichnet, daß diese Oberflächenstrukturen in ein Oberflächen-Plasmonen-Feld gebracht werden und mittels Oberflächen-Plasmonen-Mikroskopie derart abgetastet werden, daß die Oberflächenstruktur mittels einer Vorrichtung einer Metall- oder Halbleiterschicht, die sich auf einer Seite eines Glasprismas befindet, parallel zu dieser Metall- oder Halbleiterschicht genähert wird.

2. Verfahren nach Anspruch 1, dadurch gekennzeichnet, daß sich zwischen zu untersuchender Oberflächenstruktur und Metall- oder Halbleiterschicht ein Vakuum oder ein transparentes Medium befindet.

3. Verfahren nach Anspruch 2, dadurch gekennzeichnet, daß das sich zwischen zu untersuchender Oberflächenstruktur und Metall- oder Halbleiterschicht befindliche transparente Medium flüssig oder gasförmig ist.

## Claims

1. A technique for examining surface structures which differ in respect of refractive index and/or height modulation of the surface, which comprises introducing these surface structures into a plasmon surface polariton field and scanning them by surface plasmon microscopy in such a manner that the surface structure is moved by a device toward a metal or semiconductor film on a surface of a glass prism in an attitude parallel to said metal or semiconductor film.

2. A technique as claimed in claim 1, wherein there is a vacuum or a transparent medium between the surface structure to be examined and the metal or semiconductor film.

3. A technique as claimed in claim 2, wherein the transparent medium situated between the surface structure to be examined and the metal or semiconductor film is liquid or gaseous.

## Revendications

1. Procédé d'examen de structures de surface différentes en ce qui concerne l'indice de réfraction et/ou la modulation de hauteur de la surface, caractérisé par le fait qu'on met ces structures de surface dans un champ de plasmons de surface et les explore par microscopie de plasmons de surface en les approchant, au moyen d'un appareil, d'une couche de métal ou de semi-conducteur se trouvant sur une face d'un prisme en verre parallèlement à cette couche de métal ou de semi-conducteur.

2. Procédé selon la revendication 1, caractérisé par le fait qu'entre la structure de surface à examiner et la couche de métal ou de semi-conducteur se trouve un vide ou un milieu transparent.

3. Procédé selon la revendication 2, caractérisé par le fait que le milieu transparent se trouvant entre la structure de surface à examiner et la couche de métal ou de semi-conducteur est liquide ou gazeux.
